# EUROPÄISCHE PATENTSCHRIFT

(11) **EP 0 520 313 B1**
(45) Veröffentlichungstag und Bekanntmachung des Hinweises auf die Patenterteilung: **12.04.1995**
(21) Anmeldenummer: 92110212.5
(22) Anmeldetag: 17.06.1992
(51) Int. Cl.: C09C 1/00

(54) **Oberflächenmodifizierte plättchenförmige Pigmente**
Plate-like pigments with modified surfaces
Pigments en paillettes modifiés en surface

(30) Priorität: 28.06.1991 DE 4121352
(43) Veröffentlichungstag der Anmeldung: 30.12.1992
(73) Patentinhaber: MERCK PATENT GmbH, D-64271 Darmstadt (DE)
(72) Erfinder: Franz, Klaus-Dieter, Dr., W-6233 Kelkheim (DE); Dietz, Johann, Dr., W-6057 Dietzenbach (DE); Kieser, Manfred, Dr., W-6100 Darmstadt (DE)

(56) Entgegenhaltungen:
- EP-A- 0 077 959
- EP-A- 0 354 374
- ZEITSCHRIFT FÜR CHEMIE, Bd. 28 JG, Nr. 2, 1988, LEIPZIG, DE, Seiten 76-77; G. PFAFF: "HERSTELLUNG VON BATIO3-SINTERPULVER DURCH FÄLLUNG VON BATIO2(O2).3H2O"
- ZEITSCHRIFT FÜR CHEMIE, Bd. 30 JG, Nr. 10, 1990, LEIPZIG, DE, Seiten 379-380; G. PFAFF: "HERSTELLUNG VON KOMPLEXEN BARIUMTITANAT-SINTERPULVERN DURCH FÄLLUNG DER TITANYLOXALATE"

## Beschreibung

Die Erfindung betrifft oberflächenmodifizierte plättchenförmige Pigmente auf der Basis von plättchenförmigen Substraten, welche mit einer Titandioxidschicht und einer darüber befindlichen dünnen Schicht aus einem Erdalkalititanat überzogen sind.

Mit Titandioxid beschichtete plättchenförmige Substrate wie z.B. Glimmerplättchen werden häufig zur Pigmentierung von Kunststoffen, Kosmetika oder Beschichtungsmassen wie z.B. Lacken oder Druckfarben verwendet. Nachteilig ist jedoch die geringe Photostabilität von Titandioxid, die z.B. bei Weißpigmenten zu einer allmählichen Vergrauung führt. Bei einer Einarbeitung von mit Titandioxid beschichteten plättchenförmigen Substraten in eine Polymermatrix werden vielfach Oberflächenreaktionen zwischen der Titandioxidoberfläche und der umgebenden Polymermatrix beobachtet, die den ästhetischen Eindruck des pigmentierten Polymers beeinträchtigen. So führt z.B. eine Reaktion der Hydroxylgruppen aufweisenden Titandioxidoberfläche mit phenolischen Stabilisatoradditiven häufig zu einer Vergilbung des Polymers; daneben kann es aber auch zu weiteren beeinträchtigenden Oberflächenreaktionen kommen.

Die bisherigen Vorschläge zur Vermeidung dieser Probleme führen häufig nicht zu befriedigenden Ergebnissen oder sind nur zur Lösung von Teilaspekten geeignet. So werden z.B. durch die in DE 40 41 663 vorgeschlagene Silanisierung der Pigmentoberfläche Oberflächenreaktionen vielfach wirksam unterdrückt, während jedoch praktisch keine Erhöhung der Photostabilität beobachtet wird. Auch die Aufbringung weiterer Metalloxidschichten ist u.a. ungeeignet, da z.B. bei Verwendung farbiger Oxidschichten, wie z.B. Eisenoxid, die Farbeigenschaften des zugrunde liegenden mit Titandioxid beschichteten Pigments völlig verändert werden und zudem die dann oben liegenden Metalloxidschichten häufig ebenso eine hohe Oberflächenreaktivität aufweisen.

Die Aufgabe der vorliegenden Erfindung bestand darin, oberflächenmodifizierte Pigmente auf der Basis von mit Titandioxid beschichteten plättchenförmigen Substraten anzugeben, welche durch eine hohe Photostabilität und durch eine geringe Oberflächenreaktivität gegenüber organischen Verbindungen gekennzeichnet sind.

Es wurde gefunden, daß diese Aufgabe durch die Bereitstellung der erfindungsgemäßen Pigmente gelöst werden kann.

Gegenstand der Erfindung sind somit oberflächenmodifizierte Pigmente auf der Basis von plättchenförmigen Substraten, welche mit einer Titandioxidschicht und einer darüber befindlichen dünnen Schicht aus einem Erdalkalititanat überzogen sind, dadurch gekennzeichnet, daß das Pigment zur Erhöhung der Photostabilität und zur Verringerung der Oberflächenreaktivität gegenüber organischen Verbindungen bei Temperaturen von mindestens 800 °C geglüht wird.

Gegenstand der Erfindung ist weiter ein Verfahren zur Herstellung der erfindungsgemäßen Pigmente sowie die Verwendung der erfindungsgemäßen Pigmente in Formulierungen wie Lacken, Polymermaterialien und Kosmetika.

Die erfindungsgemäßen Pigmente basieren auf plättchenförmigen und vorzugsweise transparenten oder semitransparenten Substraten aus z.B. Schichtsilikaten wie etwa Glimmer, Talkum, Kaolin, aus Glas oder anderen vergleichbaren Mineralien. Daneben kommen auch Metallplättchen wie z.B. Aluminiumplättchen oder plättchenförmige Metalloxide wie z.B. plättchenförmiges Eisenoxid oder Wismutoxychlorid in Betracht. Die plättchenförmigen Substrate haben typischerweise eine Dicke zwischen 0,1 und 5 »m und insbesondere zwischen 0,2 und 4 ,5 »m. Die Ausdehnung in den beiden anderen Dimensionen beträgt üblicherweise zwischen 1 und 250 »m und insbesondere zwischen 2 und 200 »m.

Zur Abscheidung von Titandioxid kann das plättchenförmige Substrat in einer wäßrigen Titanylsulfatlösung dispergiert werden, wobei die Suspension anschließend erhitzt wird, wie dies in DE 14 67 468 beschrieben ist. Bei dem in DE 20 09 566 angegebenen Verfahren wird zu einer wäßrigen Suspension der zu beschichtenden plättchenförmigen Substrate gleichzeitig eine wäßrige Lösung eines Titansalzes und eine Base bei einem zur Abscheidung von Titandioxid geeigneten pH zudosiert, wobei durch die Basenzugabe der pH-Wert im wesentlichen konstant gehalten wird.

Da die Rutilmodifikation von Titandioxid einen höheren Brechungsindex aufweist als die Anatasmodifikation und z.B. mit Rutil-Titandioxid beschichtete Glimmersubstrate einen deutlich höheren Glanz aufweisen als Anatas-Titandioxid-Glimmerpigmente, ist die Rutilmodifikation häufig bevorzugt. Ein Verfahren zur Abscheidung von Titandioxid in Rutilform auf Glimmer ist z.B. in DE 22 14 545 angegeben. Die hier angegebenen Verfahren zur Beschichtung des Substrats mit Titandioxid sind lediglich beispielhaft gemeint und sollen die Erfindung lediglich erläutern. Es können jedoch auch noch andere, hier nicht explizit genannte Verfahren angewendet werden. Die Substrate werden nach ihrer Beschichtung mit Titandioxid üblicherweise abgetrennt, gewaschen und ggf. getrocknet oder geglüht.

Die plättchenförmige Substrate können auch zunächst mit einer oder mehreren anderen Metalloxidschichten aus z.B. Chromoxid, Eisenoxid, Zirkoniumoxid, Aluminiumoxid, Zinnoxid und/oder weiteren Metalloxiden bedeckt sein, ehe die Titandioxidschicht aufgebracht ist. Verfahren zur Abscheidung anderer Metalloxide sind z.B. beschrieben in DE 19 59 998, DE 22 15 191, DE 22 44 298, DE 23 13 331, DE 25 22 572, DE 31 37 808, DE 31 51 343, DE 31 51 354, DE 31 51 355, DE 32 11 602 oder DE 32 35 017. Erfindungsgemäße Pigmente, welche unter der Titandioxidschicht nicht mehr als 2 und insbesondere nur eine oder keine weitere Metalloxidschicht aufweisen, sind besonders bevorzugt.

Zur Erzeugung der Erdalkalititanatschicht wird zu einer wäßrigen Suspension der mit Titandioxid beschichteten plättchenförmigen Substrate ein wasserlösliches Erdalkalisalz bzw. ein Gemisch wasserlöslicher Erdalkalisalze und eine wasserlösliche Diol-Verbindung sowie ein wasserlösliches Titansalz zugegeben. Anstelle von Wasser oder wäßrigen, d.h. wasserhaltigen Lösungsmitteln können gelegentlich auch niedere Alkohole wie z.B. Methanol, Ethanol, Propanol oder iso-Butanol als Lösungsmittel verwendet werden; derartige Lösungsmittel sollen im Rahmen der vorliegenden Anmeldung unter dem Begriff wäßrige Lösungsmittel subsummiert werden.

Geeignete Erdalkalisalze sind u.a. die Erdalkalichloride, weiter auch die Erdalkalinitrate und andere wasserlösliche Verbindungen. Als Titansalz werden üblicherweise Titan(IV)-chlorid, Titanylsulfat, Titanylnitrat oder auch andere in wäßrigen Lösungen lösliche Titansalze verwendet.

Unter der Bezeichnung wasserlösliche Diol-Verbindungen sollen kürzerkettige aliphatische Diole mit vorzugsweise nicht mehr als 5 C-Atomen, weiter auch aromatische Diole, bei denen die beiden OH-Gruppen durch höchstens eine CH₂-Gruppe voneinander getrennt sind, und insbesondere auch H₂O₂ verstanden werden. Besonders geeignete Diole sind Ethylenglykol, Propylenglykol, Butan-1,2-diol, Glykolsäure, Milchsäure, Oxalsäure, Malonsäure, weiter Brenzkatechin und Resorcin sowie insbesondere H₂O₂.

Die Temperatur der Reaktionslösung ist nicht sehr kritisch und beträgt üblicherweise zwischen 20 und 80 °C und insbesondere zwischen 20 und 60 °C.

Die Abscheidung wird typischerweise bei einem pH zwischen 6 und 12 und insbesondere bei einem pH ≧ 7 durchgeführt.

Zur Durchführung der Reaktion wird eine wäßrige Suspension des mit Titandioxid beschichteten plättchenförmigen Substrats üblicherweise mit einer wäßrigen Lösung des Diols und des oder der Erdalkalisalze versetzt. Anschließend wird eine wäßrige Lösung des Titansalzes langsam zugetropft, wobei der pH-Wert vorteilhaft durch Zugabe einer Base konstant gehalten wird.

Das Titansalz und das bzw. die Erdalkalisalze werden vorzugsweise im wesentlichen in äquimolaren Mengen zugegeben. Gelegentlich hat es sich jedoch als vorteilhaft erwiesen, das Erdalkalisalz im Unter- oder Überschuß zuzusetzen, wobei das Mengenverhältnis von Erdalkalisalz zu Titansalz vorzugsweise zwischen 0,8 und 1,2 und insbesondere zwischen 0,95 und 1,05 liegt. Die Menge des Diols bezogen auf die Mengen von Titansalz und Erdalkalisalz bzw. Erdalkalisalzen, beträgt vorzugsweise die zweifache molare Menge, wobei auch hier Abweichungen von den stöchiometrischen Mengen möglich sind. Die angegebenen Mengenverhältnisse sollen die Erfindung lediglich erläutern, ohne sie zu begrenzen.

Bei Verwendung eines Erdalkalichlorids, von Titanchlorid sowie von Oxalsäure ergibt sich folgende Reaktionsgleichung, die jedoch nur beispielhaft zu verstehen ist und die Erfindung lediglich erläutern soll, ohne sie zu begrenzen (G. Pfaff, Z. Chem., 30 (1990) 379):

MCl₂ + TiCl₄ + 2 H₂C₂O₄ + 5 H₂O →MTiO(C₂O₄)₂ . 4 H₂O + 6 HCl M = Ba, Sr, Ca

Die Ausfällung derartiger Titankomplexe ist an sich bekannt und z.B. in G. Pfaff, Z. Chem. 28 (1988) 76, Z. Chem. 29 (1989) 395 sowie loc. cit. beschrieben. In dem abgeschiedenen Komplex ist das Titanylion von 2 Oxalat-Ionen und 4 Wassermolekülen umgeben, während im Fall von H₂O₂ ein Komplex der Zusammensetzung MTiO₂(O₂) (G. Pfaff, Z. Chem., 28 (1988) 76) gefunden wurde. Die besondere Eignung der oben angegebenen Diole für das erfindungsgemäße Verfahren ist vermutlich darauf zurückzuführen, daß diese kleinen oder relativ kleinen Diol-Moleküle die Ausbildung dieser Komplexe ermöglichen und nicht sterisch behindern.

Die Auffällung eines Calciumtitanyloxalat-Komplexes auf ein mit Titandioxid beschichtetes Glimmersubstrat ist erstmals in DE 38 24 809 (s. Beispiel 14) beschrieben. Dort wurde jedoch das beschichtete Substrat abgetrennt und in einem reduzierenden Gasstrom geglüht, was zur Ausbildung einer Oxidbronzenschicht führt.

Kernpunkt der vorliegenden Erfindung ist demgegenüber, daß das beschichtete Substrat nach dem Abtrennen, Waschen und ggf. Trocknen bei Temperaturen von mindestens 800 °C geglüht wird. Bei diesen hohen Temperaturen zersetzt sich der aufgefällte Komplex unter Bildung eines in Perovskit-Struktur vorliegenden Erdalkalititanates. Die Glühtemperatur beträgt besonders bevorzugt mindestens 850 °C und insbesondere mindestens 900 °C. Die maximale Glühtemperatur beträgt vorzugsweise 1200 °C und insbesondere nicht mehr als 1000 °C.

Es wurde gefunden, daß mit Titandioxid beschichtete plättchenförmige Susbtrate, welche eine derartige Deckschicht aus einem stöchiometrischen Erdalkalititanat aufweisen, eine deutlich höhere Photostabilität und eine wesentlich geringere Oberflächenreaktivität gegenüber organischen Verbindungen und insbesondere gegenüber solchen mit Hydroxylgruppen aufweisen als die mit Titandioxid beschichteten Substrate.

Die Auffällung wird vorzugsweise so durchgeführt, daß nach dem Glühen eine relativ dünne Erdalkalititanatschicht von weniger als 40 nm erhalten wird, da die optischen Eigenschaften des mit Titandioxid beschichteten plättchenförmigen Substrates durch eine derartig dünne Deckschicht nicht oder nur unwesentlich beeinflußt werden, was vielfach erwünscht ist. Zur Erzielung besonderer optischer Effekte können aber auch dickere Erdalkalititanatschichten von mehr als 40 nm verwendet werden; die maximale Schichtdicke liegt bei etwa 400 nm, wobei jedoch Schichtdicken von nicht mehr als 250 nm i.a. bevorzugt sind. Der auf das erfindungsgemäße Pigment bezogene Massenanteil der Erdalkalititanatschicht beträgt vorzugsweise zwischen 0,1 und 20 Massenprozente und insbesondere zwischen 0,2 und 10 Massenprozente.

Die im folgenden angegebenen Beispiele sollen die Erfindung erläutern, ohne sie zu begrenzen.

### Beispiel

100g Iriodin 119 (Handelsprodukt der Fa. E. Merck, Darmstadt) werden in vollentsalztem Wasser suspendiert. Die Suspension wird durch Zugabe einer 10%igen wäßrigen NaOH-Losung auf pH=9 eingestellt. Anschließend werden 50 ml einer wäßrigen Losung von CaCl₂, Titansalz, z.B. TiCl₄, und H₂O₂ (7,2 g CaCl₂ x 2H₂O, 0,08 mol Titansalz und 6 ml einer 30%igen H₂O₂-Lösung mit Wasser auf 50 ml Volumen aufgefüllt) bei 75°C innerhalb von 30 Minuten zudosiert, wobei der pH im wesentlichen konstant gehalten wird.

Das Reaktionsprodukt wird abfiltriert, getrocknet und bei 900°C geglüht. Man erhält ein weißes Perlglanzpigment, das gegen Vergilbung stabilisiert ist.

## Patentansprüche

1. Oberflächenmodifizierte plättchenförmige Pigmente auf der Basis von plättchenförmigen Substraten, welche mit einer Titandioxidschicht und einer darüber befindlichen Schicht aus einem Erdalkalititanat überzogen sind, dadurch gekennzeichnet, daß das Pigment zur Erhöhung der Photostabilität und zur Verringerung der Oberflächenreaktivität gegenüber organischen Verbindungen bei Temperaturen von mindestens 800 °C geglüht wird.

2. Verfahren zur Herstellung der Pigmente nach Anspruch 1, dadurch gekennzeichnet, daß zu einer wäßrigen Suspension eines mit Titandioxid beschichteten plättchenförmigen Substrates ein wasserlösliches Titansalz, ein wasserlösliches Erdalkalisalz bzw. ein Gemisch wasserlöslicher Erdalkalisalze und eine wasserlösliche 1,2-Diolverbindung unter Bedingungen zugegeben werden, die zur Abscheidung eines Erdalkalititanoxo- oder -peroxokomplexes führen, daß das Reaktionsprodukt abgetrennt, gewaschen und ggf. getrocknet wird und bei Temperaturen von mindestens 800 °C geglüht wird.

3. Verwendung der Pigmente gemäß Anspruch 1 in Formulierungen wie Lacken, Kunststoffen und Kosmetika.

## Claims

1. Surface-modified plate-like pigments based on plate-like substrates which are coated with a titanium dioxide layer and an alkaline earth metal titanate film on top of it, characterised in that the pigment, in order to increase the photostability and to decrease the surface reactivity towards organic compounds, is ignited at temperatures of at least 800°C.

2. Process for the preparation of the pigments according to Claim 1, characterised in that a water-soluble titanium salt, a water-soluble alkaline earth metal salt or a mixture of water-soluble alkaline earth metal salts and a water-soluble 1,2-diol compound are added to an aqueous suspension of a plate-like substrate coated with titanium dioxide under conditions leading to the deposition of an alkaline earth metal titanium oxo or peroxo complex, in that the reaction product is separated off, washed and, if desired, dried and ignited at temperatures of at least 800°C.

3. Use of the pigments according to Claim 1 in formulations, such as paints, plastics and cosmetics.

## Revendications

1. Pigments lamellaires modifiés en surface, à base de substrats lamellaires, qui sont revêtus d'une couche de dioxyde de titane, laquelle est recouverte d'une couche en le titanate d'un métal alcalino-terreux, caractérisés en ce que le pigment, pour augmenter la photostabilité et diminuer la réactivité superficielle vis-à-vis des composés organiques, est calciné à des températures d'au moins 800°C.

2. Procédé pour fabriquer les pigments selon la revendication 1, caractérisé en ce qu'on ajoute à une suspension aqueuse d'un substrat lamellaire revêtu de dioxyde de titane un sel de titane soluble dans l'eau, un sel d'un métal alcalino-terreux soluble dans l'eau ou un mélange de sels de métaux alcalino-terreux solubles dans l'eau et d'un 1,2-diol soluble dans l'eau, dans des conditions conduisant au dépôt d'un complexe métal alcalin-titane-oxo ou -peroxo ; qu'on sépare le produit de la réaction, qu'on le lave et éventuellement qu'on le sèche, et qu'on le calcine à des températures d'au moins 800°C.

3. Utilisation des pigments selon la revendication 1 dans des formulations telles que des peintures et vernis, des plastiques et des produits cosmétiques.
